Europäisches Patentamt

European Patent Office

Office européen des brevets

(19)

(11) Veröffentlichungsnummer: **0 101 032**
**A2**

(12) # EUROPÄISCHE PATENTANMELDUNG

(21) Anmeldenummer: 83107747.4

(22) Anmeldetag: 05.08.83

(51) Int. Cl.³: **B 41 J 11/42**
**B 41 J 3/46**

(30) Priorität: 09.08.82 DE 3229590

(43) Veröffentlichungstag der Anmeldung:
22.02.84 Patentblatt 84/8

(84) Benannte Vertragsstaaten:
CH FR GB IT LI NL SE

(71) Anmelder: SIEMENS AKTIENGESELLSCHAFT
Berlin und München Wittelsbacherplatz 2
D-8000 München 2(DE)

(72) Erfinder: Schulte, Georg, Dipl.-Phys.
Wichernstrasse 6
D-8580 Bayreuth(DE)

(72) Erfinder: Mann, Harald, Ing. grad.
Karwendelstrasse 22
D-8135 Söcking(DE)

(54) Verfahren und Anordnung zum Bedrucken von Formularen.

(57) Zum Bedrucken von Formularen (F) mittels einer Textstation wird jedes Formular (F) zur Unterscheidung seiner zu bedruckenden und nicht zu bedruckenden Felder von einem Abtaster (ABT) abgetastet, der als Ergebnis dieser Abtastung eine aus beschreibbaren und nicht beschreibbaren Bereichen bestehende Maske (MSK) erzeugt, die auf einer Anzeigeeinrichtung (ANZ) abgebildet wird. Den Bereichen der Maske (MSK) werden hierbei die entsprechenden Felder des Formulars (F) zugeordnet. Nach dem Ausfüllen der Maske (MSK) auf der Anzeigeeinrichtung (ANZ) mittels über eine Tastatur (TST) eingegebene Zeichen wird das Formular (F) mit diesen Zeichen bedruckt, wobei der Ausdruck der Maske (MSK) selbst gesperrt wird.

FIG 3

EP 0 101 032 A2

0101.032

SIEMENS AKTIENGESELLSCHAFT
Berlin und München

Unser Zeichen
VPA 82 P 1 6 3 5 E

## Verfahren und Anordnung zum Bedrucken von Formularen

Die Erfindung betrifft ein Verfahren und eine Anordnung zum Bedrucken von Formularen mittels einer Textstation entsprechend dem Oberbegriff des Patentanspruchs 1.

Beim Bedrucken eines Formulars mittels einer Textstation hat der Benutzer durch die Verwendung einer Anzeigeeinrichtung, auf die die eingegebenen Zeichen zunächst geschrieben werden, die Möglichkeit, die eingegebenen Zeichen auf ihre Richtigkeit hin zu überprüfen und ggfs. eine Korrektur durch eine Neueingabe durchzuführen. Doch ist es hierbei erforderlich, eine Zuordnung zwischen den einzelnen Positionen auf dem Formular und auf der Anzeigeeinrichtung herzustellen, damit der Benutzer jederzeit darüber informiert ist, an welcher Stelle auf dem Formular ein gerade eingegebenes Zeichen gedruckt werden wird.

Aus der DE-OS 29 26 669 ist eine Textstation bekannt, bei der die Zuordnung von einzelnen Positionen auf der Anzeigeeinrichtung und dem zu bedruckenden Formular dadurch erreicht wird, daß bei Betätigung einer Tastatur zur Eingabe und Darstellung eines Zeichens auf der Anzeigeeinrichtung der Druckkopf des Druckers eine zugehörige speichergesteuerte Einstellbewegung gegenüber dem zu bedruckenden Formular ausführt, wobei noch kein Ausdrucken der Zeichen erfolgt. Die Zeichen werden erst später auf ein gesondertes Befehlssignal hin ausgedruckt. Durch diese Bewegung des Druckkopfes ist eine eindeutige Zuordnung von einzelnen Positionen auf der Anzeigeeinrichtung und dem zu bedruckenden Formular gewährleist, so daß der Benutzer stets feststellen kann, ob eingegebene

Lf 1 Die / 02.08.1982

Zeichen auch an den hierfür vorgesehenen Stellen auf dem Formular zum Ausdrucken gelangen.

Doch weist diese bekannte Textstation den Nachteil auf, daß die mechanischen Teile des Druckers durch die verhältnismäßig vielen Einstellbewegungen des Druckkopfes übermäßig stark beansprucht werden, was zu einem vorzeitigen Verschleiß führen kann. Darüber hinaus ist für die vielen Einstellbewegungen des Druckkopfes ein relativ hoher Steuerungs- und Speicheraufwand erforderlich. Außerdem muß der Druckkopf derart angeordnet sein, daß die Druckstelle immer sichtbar ist. Weiterhin ist es von Nachteil, daß sich der Benutzer nicht auf die Arbeiten an der Anzeigeeinrichtung konzentrieren kann.

Der Erfindung liegt die Aufgabe zugrunde, unter Vermeidung der bisherigen Nachteile ein weiteres Verfahren sowie eine Anordnung zur Durchführung dieses Verfahrens anzugeben, bei deren Verwendung das Bedrucken von Formularen mittels einer Textstation auf einfache Weise erfolgt.

Erfindungsgemäß wird diese Aufgabe bei dem Verfahren der eingangs genannten Art durch die im Patentanspruch 1 angegebenen Merkmale gelöst.

Vorteilhafte Ausgestaltungen des Verfahrens gemäß der Erfindung sind in den Ansprüche 2 und 3 angegeben.

Eine Anordnung zur Durchführung des Verfahrens, bei der die Tastatur über eine erste Eingabesteuerung und eine Zentralsteuerung mit dem Arbeitsspeicher in Verbindung steht und der Arbeitsspeicher über die Zentralsteuerung und eine erste bzw. zweite Ausgabesteuerung die Anzeigeeinrichtung bzw. den Drucker ansteuert, ist dadurch gekennzeichnet, daß der Abtaster über eine zweite Eingabesteuerung und über die Zentralsteuerung hinweg mit dem

**0101032**

Arbeitsspeicher verbunden ist, und daß die Erzeugung der Maske in der Zentralsteuerung erfolgt.

Vorteilhafte Ausgestaltungen der Anordnung zur Durchführung des Verfahrens gemäß der Erfindung sind in den Ansprüchen 5 bis 7 angegeben.

Im folgenden wird das Verfahren und eine Anordnung zur Durchführung des Verfahrens gemäß der Erfindung anhand einer Zeichnung näher erläutert.

Es zeigen

Fig. 1 einen Ausschnitt aus einem zu bedruckenden Formular,

Fig. 2 einen Ausschnitt aus einer auf einer Anzeigeeinrichtung dargestellten Maske,

Fig. 3 ein Blockschaltbild der Anordnung zur Durchführung des Verfahrens.

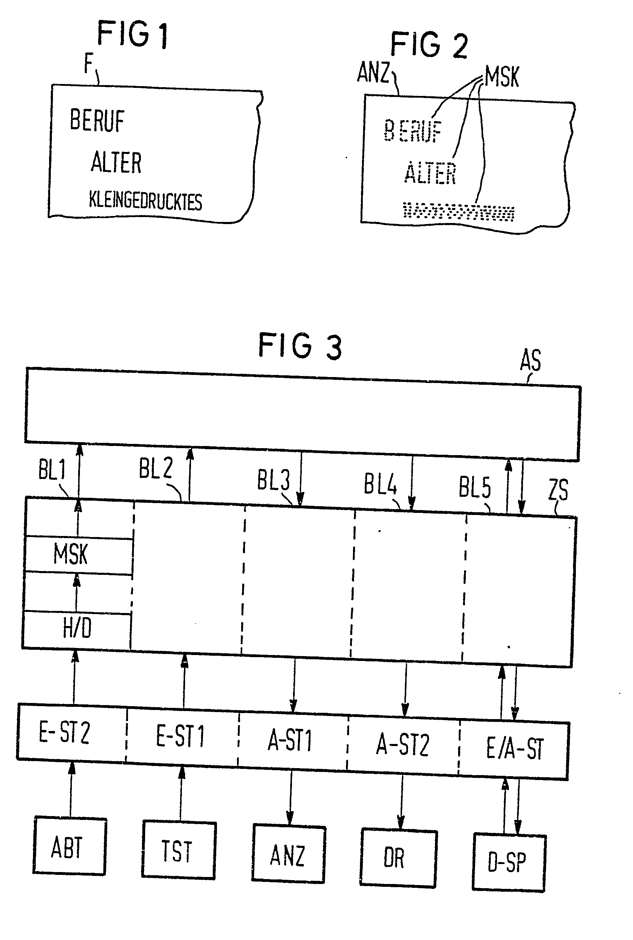

Ein in der Fig. 1 dargestellter Ausschnitt eines Formulars F weist zu bedruckende und nicht zu bedruckende Felder auf. Als nicht zu bedruckende Felder wurden hier z.B. die Worte "BERUF" und "ALTER" gewählt. Die Felder hinter diesen beiden Worten sind die zu bedruckenden Felder.

Die einzelnen Felder sind untereinander in der Regel nicht gleich groß. Dies soll durch das in kleineren Buchstaben dargestellte Wort "KLEINGEDRUCKTES" angedeutet werden. Dieses Wort stellt ebenfalls ein nicht zu bedruckendes Feld dar, hinter dem sich das zugehörige zu bedruckende Feld anschließt.

Das Formular F wird zur Unterscheidung der zu bedruckenden und nicht zu bedruckenden Felder abgetastet. Als Ergebnis dieser Abtastung wird eine Maske MSK erzeugt, die auf einer Anzeigeeinrichtung ANZ, vorzugsweise einem Bildschirm, dargestellt wird (Fig. 2). Die Maske MSK besteht aus beschreibbaren und nicht beschreibbaren Bereichen, die den zu bedruckenden und nicht zu bedruckenden Feldern des Formulars F entsprechen. Die nicht beschreibbaren Bereiche der Maske MSK sind wiederum die Worte "BERUF" und "ALTER", die zwar noch lesbar sind, aber durch die Abtastung etwas verschwommen erscheinen. Dagegen ist der weitere, nicht beschreibbare Bereich der Maske MSK, der dem nicht zu bedruckenden Feld "KLEINGEDRUCKTES" auf dem Formular F entspricht, überhaupt nicht mehr lesbar. Dies ließe sich zwar z.B. durch eine feinere Abtastung oder durch eine höhere Bildauflösung der Anzeigeeinrichtung ANZ vermeiden, doch reicht eine Grobabtastung sowie eine normale Bildauflösung vollkommen aus, da der Benutzer unlesbare, nicht beschreibbare Bereiche auf der Anzeigeeinrichtung ANZ durch einen Vergleich mit den entsprechenden Feldern des Formulars F stets identifizieren kann.

Das eigentliche Verfahren wird im Zusammenhang mit der Fig. 3 erläutert, in der ein Blockschaltbild der Anordnung zur Durchführung des Verfahrens angegeben ist. Diese Anordnung wird aus einer Textstation gebildet. Sie enthält einen Arbeitsspeicher AS, eine aus fünf Blöcken BL1 bis BL5 bestehende Zentralsteuerung ZS, eine weitere Steuereinheit, die aus zwei Eingabesteuerungen E-ST1, E-ST2, zwei Ausgabesteuerungen A-ST1, A-ST2 und einer Eingabe- und Ausgabesteuerung E/A-ST besteht, sowie verschiedene periphere Einheiten. Die peripheren Einheiten sind ein Abtaster ABT, eine Tastatur TST, die Anzeigeeinrichtung ANZ, ein Drucker DR und ein Dauerspeicher D-SP.

Die Anzeigeeinrichtung ANZ ist hierbei vorzugsweise - wie schon erwähnt - als Bildschirm ausgebildet, der eine normale Bildauflösung aufweist. Entsprechend weist der Abtaster ABT eine Grobabtastung auf.

In der Fig. 3 sind der Abtaster ABT und der Drucker DR aus zeichentechnischen Gründen als voneinander getrennte Einheiten dargestellt. Doch ist es zweckmäßig, daß der Abtaster ABT zusammen mit dem Drucker DR eine Einheit bildet.

Das zu bedruckende Formular F wird in einem ersten Verfahrensschritt in den Drucker DR eingespannt, wo es von dem Abtaster ABT zur Unterscheidung der zu bedruckenden und nicht zu bedruckenden Felder abgetastet wird. Der Abtaster ABT ist über die zweite Eingabesteuerung E-ST2 und über den ersten Block BL1 der Zentralsteuerung ZS hinweg mit dem Arbeitsspeicher AS verbunden. Als Ergebnis der Abtastung wird in dem ersten Block BL1 der Zentralsteuerung ZS die Maske dadurch erzeugt, daß der Abtastet ABT die zu bedruckenden und nicht zu bedruckenden Felder des Formulars F in Form einer Hell/Dunkel-Interpretation H/D voneinander unterscheidet. Die Makse MSK gelangt in den Arbeitsspeicher AS, der über den dritten Block BL3 der Zentralsteuerung ZS und die erste Ausgabesteuerung A-ST1 die Anzeigeeinrichtung ANZ ansteuert. Auf diese Weise wird die Maske MSK auf der Anzeigeeinrichtung ANZ abgebildet. Die Makse MSK weist beschreibbare und nicht beschreibbare Bereiche auf, die den entsprechenden Feldern des Formulars F zugeordnet sind.

Die Tastatur TST zur Eingabe der Zeichen ist über die erste Eingabesteuerung E-ST1 und den zweiten Block BL2 der Zentralsteuerung ZS mit dem Arbeitsspeicher AS verbunden. Die eingegebenen Zeichen werden in dem Arbeitsspeicher AS abgelegt und gelangen gleichzeitig über den dritten Block BL3 der Zentralsteuerung ZS und die erste Ausgabesteuerung A-ST1 an die Anzeigeeinrichtung ANZ, wo sie in den beschreibbaren Bereichen der Maske MSK erscheinen.

Der Druckvorgang selbst erfolgt zu einem späteren Zeitpunkt und wird solange ausgesetzt, bis auf der Anzeigeeinrichtung ANZ alle notwendigen Korrekturen bezüglich der eingegebenen Zeichen erfolgt sind. Bei Auslösung des Druckvorgangs werden die im Arbeitsspeicher AS abgelegten Zeichen ausgelesen und gelangen über den vierten Block BL4 der Zentralsteuerung ZS und die zweite Ausgabesteuerung A-ST2 zu dem Drucker DR, wo sie auf dem Formular F ausgedruckt werden. Es werden nur die eingegebenen Zeichen selbst ausgedruckt, während der Ausdruck der Maske MSK gesperrt wird.

Um bei öfter zubedruckenden Formularen eine hierfür erforderliche mehrmalige Abtastung zu vermeiden, ist ein vorzugsweise als Floppy Disk ausgestalteter Dauerspeicher D-SP vorgesehen, in dem die durch einmalige Abtastung erzeugte Maske MSK archiviert werden kann. Hierzu gelangt die Maske MSK von dem Arbeitsspeicher AS über den fünften Block BL5 der Zentralsteuerung ZS und die Eingabe- und Ausgabesteuerung E/A-ST zu dem Dauerspeicher D-SP. Bei Bedarf kann die Maske auf dem Dauerspeicher D-SP abgerufen werden, und gelangt auf umgekehrtem Weg über die Eingabe- und Ausgabesteuerung E/A-ST und den fünften Block BL5 der Zentralsteuerung ZS wieder in den Arbeitsspeicher AS. Dieser Sachverhalt ist in der Fig. 3 durch die gegenläufigen Pfeilrichtungen angedeutet.

Zur besseren Übersicht sind die Funktionen der fünf Blöcke BL1 bis BL5 der Zentralsteuerung ZS noch einmal zusammengestellt:

BL1: Maskenerzeugung durch Hell-Dunkelinterpretation.

BL2: Zeicheneingabe durch Tastatur.

BL3: Abbildung von Maske und eingegebenen Zeichen auf Anzeigeeinrichtung.

BL4: Ausdrucken der Zeichen, Ausdruck der Maske sperren.

BL5: Maske archivieren bzw. abrufen.


7 Patentansprüche

3 Figuren

Patentansprüche

1. Verfahren zum Bedrucken von Formularen mittels einer Textstation, bei dem mittels einer Tastatur eingegebene Zeichen in einem Arbeitsspeicher abgelegt und auf eine Anzeigeeinrichtung geschrieben werden, und bei dem die im Arbeitsspeicher abgelegten Zeichen zu einem späteren Zeitpunkt aus dem Arbeitsspeicher ausgelesen und anschließend mittels eines Druckers auf dem Formular ausgedruckt werden, wobei das Formular sowohl mit zu bedruckenden als auch mit nicht zu bedruckenden Feldern versehen ist, d a d u r c h   g e k e n n z e i c h n e t , daß das Formular (F) zur Unterscheidung der zu bedruckenden und nicht zu bedruckenden Felder von einem Abtaster (ABT) abgetastet wird, daß als Ergebnis dieser Abtastung eine auf der Anzeigeeinrichtung (ANZ) abgebildete Maske (MSK) mit beschreibbaren und nicht beschreibbaren Bereichen erzeugt wird, daß diese Bereiche der Maske (MSK) den entsprechenden Feldern des Formulars (F) zugeordnet werden, daß die Zeichen mittels der Tastatur (TST) in die beschreibbaren Bereiche der Maske (MSK) eingegeben werden, und daß beim Ausdrucken der Zeichen der Ausdruck der Maske (MSK) selbst gesperrt wird.

2. Verfahren nach Anspruch 1, d a d u r c h   g e k e n n - z e i c hn e t , daß der Abtaster (ABT) die zu bedruckenden und nicht zu bedruckenden Felder des Formulars (F) in Form einer Hell/Dunkel-Interpretation (H/D) voneinander unterscheidet.

3. Verfahren nach Anspruch 1 oder 2, d a d u r c h   g e - k e n n z e i c h n e t , daß die durch die Abtastung erzeugte Maske (MSK) in einem Dauerspeicher (D-SP) archiviert und bei Bedarf abgerufen wird.

0101032

4. Anordnung zur Durchführung des Verfahrens nach Anspruch 1, bei der die Tastatur über eine erste Eingabesteuerung und eine Zentralsteuerung mit dem Arbeitsspeicher in Verbindung steht und der Arbeitsspeicher über die Zentralsteuerung und eine erste bzw. zweite Ausgabesteuerung die Anzeigeeinrichtung bzw. den Drucker ansteuert, d a d u r c h   g e k e n n z e i c h n e t , daß der Abtaster (ABT) über eine zweite Eingabesteuerung (E-ST2) und über die Zentralsteuerung (ZS) hinweg mit dem Arbeitsspeicher (AS) verbunden ist, und daß die Erzeugung der Maske (MSK) in der Zentralsteuerung (ZS) erfolgt.

5. Anordnung nach Anspruch 4, d a d u r c h   g e k e n n z e i c h n e t , daß der Abtaster (ABT) eine Grobabtastung aufweist.

6. Anordnung nach Anspruch 4 oder 5, d a d u r c h   g e k e n n z e i c h n e t , daß die Anzeigeeinrichtung (ANZ) eine normale Bildauflösung aufweist.

7. Anordnung nach einem der Ansprüche 4 bis 6, d a - d u r c h  g e k e n n z e i c h n e t , daß der Abtaster (ABT) mit dem Drucker (DR) eine Einheit bildet.

1/1

## FIG 1

F

BERUF

ALTER

KLEINGEDRUCKTES

## FIG 2

ANZ    MSK

B ERUF

ALTER

II:>>>>>>>IIIIIIII

## FIG 3

AS

BL1    BL2    BL3    BL4    BL5    ZS

MSK

H/D

| E-ST 2 | E-ST 1 | A-ST 1 | A-ST 2 | E/A-ST |

| ABT | TST | ANZ | DR | D-SP |